# EUROPEAN PATENT APPLICATION

(11) **EP 4 625 676 A1**
(43) Date of publication of application: **01.10.2025**
(21) Application number: 23907773.8
(22) Date of filing: 20.12.2023
(51) Int. Cl.: H01M 50/503, H01M 50/507, H01M 50/20

(54) **BUS BAR ASSEMBLY AND BATTERY MODULE COMPRISING SAME**

(30) Priority: 22.12.2022 KR 20220181897; 19.12.2023 KR 20230186183
(71) Applicant: LG Energy Solution, Ltd., Seoul 07335 (KR)
(72) Inventor: LEE, Jae Ho, Daejeon 34122 (KR); KIM, Sang Hun, Daejeon 34122 (KR); KANG, Gyung Soo, Daejeon 34122 (KR)
(74) Representative: Plasseraud IP
(86) International application number: PCT/KR2023/021177
(87) International publication number: WO 2024/136490

(57) **Abstract**

The present invention relates to a busbar assembly, which is easily deformable in shape, connected to a secondary battery including various types of electrode leads so as to be applied to various types of battery modules, and is fixed without separate additional member to improve efficiency of a manufacturing process, and a battery module including the same.

A busbar assembly according to the present invention may include a pair of busbars crossing each other, a shaft disposed at a point at which the pair of busbars cross each other to hingedly connect the pair of busbars, and an elastic member connected between the pair of busbars.

## Description

### TECHNICAL FIELD

### CROSS-REFERENCE TO RELATED APPLICATION

The present application claims the benefit of the priority of Korean Patent Application Nos. 10-2022-0181897, filed on December 22, 2022, and 10-2023-0186183, filed on December 19, 2023, which are hereby incorporated by reference in their entirety.

### TECHNICAL FIELD

The present invention relates to a busbar assembly and a battery module including the same, and more particularly, to a busbar assembly through which chargeable and dischargeable secondary batteries are electrically connected to each other, and a battery module including the same.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Secondary batteries may be classified into cylindrical cells, pouch cells, and prismatic cells according to their shape. Among them, the pouch cell may include an electrode assembly in which a positive electrode, a negative electrode, and a separator are stacked in the pouch.

The plurality of secondary batteries described above may be accommodated in a frame to constitute a battery module. Here, the battery module may include a busbar connected to an electrode lead of the secondary battery so that the plurality of secondary batteries are electrically connected to each other.

Recently, various types of battery modules have been developed, and a secondary battery including various types of electrode leads are being developed to be disposed inside a frame of a battery module. In this regard, since the busbar has a fixed shape that is difficult to be deformed, there is a problem in that the busbar is not applied to various types of battery modules by being connected to a secondary battery including various type electrode leads.

Thus, there is a need for a busbar assembly that is applicable to various type battery modules by being connected to a secondary battery including various types of electrode leads, and a battery module including the same.

### DISCLOSURE OF THE INVENTION

### TECHNICAL PROBLEM

An object of the present invention is to provide a busbar assembly that is easily modified to be applicable to various type battery modules, and a battery module including the same.

### TECHNICAL SOLUTION

A busbar assembly according to the present invention may include a pair of busbars crossing each other, a shaft disposed at a point at which the pair of busbars cross each other to hingedly connect the pair of busbars, and an elastic member connected between the pair of busbars.

Each of the pair of busbars may include a connection hole defined at the point, at which the pair of busbars cross each other, to be penetrated from one surface to the other surface, wherein the shaft may be inserted into the connection hole so that the pair of busbars are connected to each other.

The shaft may include a polymer having a melting point lower than that of the busbar.

The pair of busbars may include: a first busbar; and a second busbar having a width less than that of the first busbar, wherein the first busbar may be provided at the point that crosses the second busbar and include an insertion hole that is penetrated so that the second busbar is inserted.

The first busbar may include a first connection hole defined in each of both sides of the insertion hole and having a shape penetrated from one surface to the other surface, and the second busbar may include a second connection hole defined at the point that crosses the first busbar and having a shape penetrated from one surface to the other surface, wherein the shaft may be inserted into the first connection hole and the second connection hole so that the first busbar and the second busbar are connected to each other.

A battery module according to the present invention includes: a cell stack in which a plurality of cell, each of which includes an electrode lead and a case, are stacked; and a busbar assembly connected to the electrode leads of the cells to electrically connect the cells to each other, wherein the busbar assembly includes: a pair of busbars, each of which one end is in contact with the electrode lead, the pair busbars crossing each other; a shaft disposed at a point, at which the pair of busbars cross each other, to hingedly connect the pair of busbars to each other; and an elastic member connected between the pair of busbars.

The busbar may have a surface, which is parallel to one surface of the electrode lead, on one end thereof that is in contact with the electrode lead.

The busbar may include a plurality of protrusions provided on one end thereof that is in contact with the electrode lead so as to be fixed to a surface of the electrode lead.

The busbar may include: a contact part disposed at one side of the shaft and in contact with the electrode lead; and an extension part disposed at the other side of the shaft and extending in a direction away from the shaft, wherein the elastic member may be disposed between the pair of extension parts and has one end and the other end, which are connected to the pair of extension parts, respectively.

The electrode lead may be disposed in a shape that protrudes to the outside of the case.

The electrode lead may be disposed in a shape that is recessed into one surface of the case.

A portion of the busbar assembly may be disposed between the case of one cell and the case of the other cell adjacent to the one cell.

### ADVANTAGEOUS EFFECTS

The busbar assembly according to the present invention may include the pair of busbars crossing each other, the shaft disposed at the point at which the pair of busbars cross each other to hingedly connect the pair of busbars, and the elastic member connected between the pair of busbars.

Therefore, the usability of the busbar assembly may be improved because the busbar is easily electrically connected to the secondary battery including the various types of electrode leads.

In addition, the busbar assembly may be fixed to the electrode lead without the additional connection process by the force applied by the elastic member to improve the efficiency of the manufacturing process.

In addition, when the temperature increases too much, the shaft may be melted to block the current from flowing through the busbar, thereby improving the stability of the battery module.

The effects of the prevent invention are not limited by the aforementioned description, and thus, more varied effects are involved in this specification.

### BRIEF DESCRIPTION OF THE DRAWINGS

FIG. 1 is a schematic perspective view of a busbar assembly according to an embodiment of the present invention.
FIG. 2 is a schematic front view of the busbar assembly according to an embodiment of the present invention.
FIG. 3 is a schematic exploded perspective view of the busbar assembly according to an embodiment of the present invention.
FIG. 4 a schematic exploded perspective view of a busbar assembly according to another embodiment of the present invention.
FIG. 5 is a schematic perspective view of the busbar assembly according to another embodiment of the preset invention.
FIG. 6 is a schematic front view of the busbar assembly according to another embodiment of the preset invention.
FIG. 7 is a schematic plan view illustrating a state in which a busbar assembly is connected to an electrode lead according to an embodiment of the present invention.
FIG. 8 is a schematic plan view illustrating a state in which a busbar assembly is connected to an electrode lead according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Busbar assembly

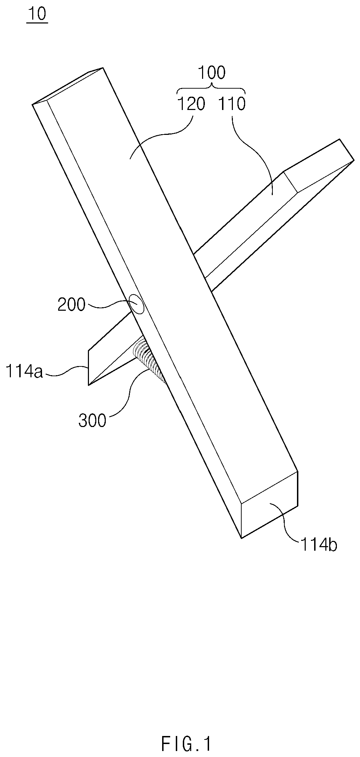

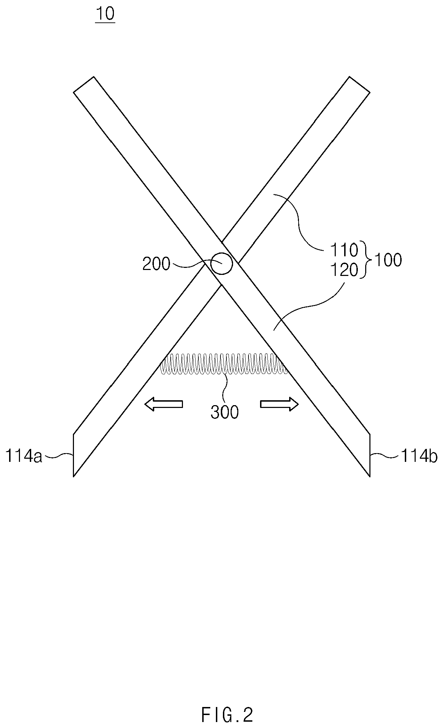

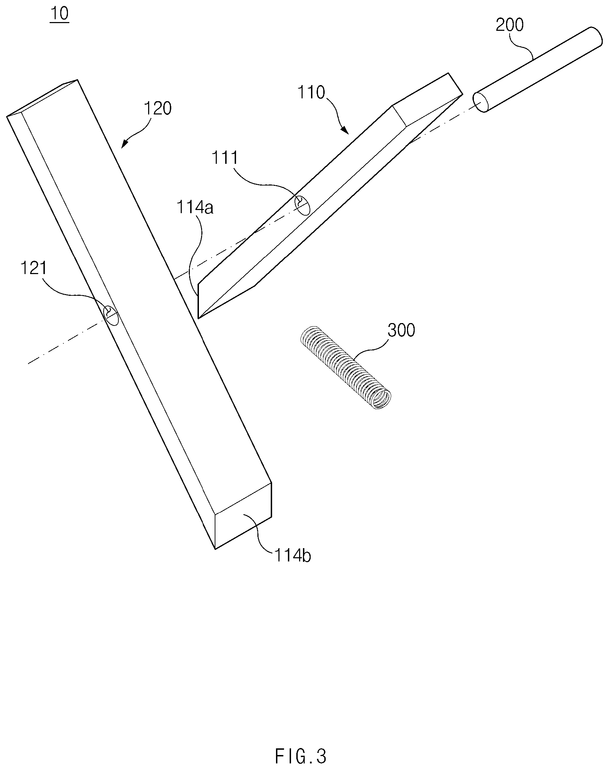

FIG. 1 is a schematic perspective view of a busbar assembly 10 according to an embodiment of the present invention, and FIG. 2 is a schematic front view of the busbar assembly 10 according to an embodiment of the present invention. In addition, FIG. 3 is a schematic exploded perspective view of the busbar assembly 10 according to an embodiment of the present invention.

The busbar assembly 10 according to an embodiment of the present invention may include a busbar 100, a shaft 200, and an elastic member 300.

Referring to FIG. 1, a pair of busbars 100 may be provided and disposed to cross each other. Here, the shaft 200 may be disposed at a point at which the pair of busbars 100 cross each other to hingedly connect the pair of busbars 100 to each other. Thus, the pair of busbars 100 may rotate relative to each other through the shaft 200. For example, a shape in which the pair of busbars 100 are arranged to cross each other and are hingedly connected by the shaft 200 may be similar to a shape in which a pair of scissor blades are rotatably connected to each other. Referring to FIG. 2, the pair of busbars 100 that cross each other may have an approximately X-shape when viewed from the front.

The busbar 100 may have a substantially plate shape, and a size of the busbar 100 may vary as needed. In addition, the shaft 200 may have a substantially cylindrical shape. Since the shaft 200 has to be inserted into the inside of the busbar 100, a cross-section of the shaft 200 may have an approximately circular cross-section having a diameter less than a thickness of the busbar 100.

As an example of a configuration for being coupled to each other by the shaft 200, the pair of busbars 100 according to an embodiment of the present invention may include connection holes 111 and 121, respectively. Referring to FIG. 3, the connection holes 111 and 121 may be defined at points at which the pair of busbars 100 cross each other, and each of the connection holes 111 and 121 may have a shape that passes from one surface to the other surface. Here, surfaces of the busbars 100 may be surfaces facing each other.

The pair of busbars 100 coupled to each other by the shaft 200 may be connected to be in contact with each other.

When the pair of busbars 100 are referred to as a first busbar 110 and a second busbar 120, a first connection hole 111 may be defined in the first busbar 110, and a second connection hole 121 may be defined in the second busbar 120.

The shaft 200 may be inserted to pass through the connection holes 111 and 121 so as to connect the first busbar 110 to the second busbar 120. Each of the connection holes 111 and 121 may have a cylindrical shape with a substantially circular cross-section to facilitate the insertion of the shaft 200 and may be defined to have a cross-section greater than that of the cross-section of the shaft 200.

As an example of a configuration for providing force for the pair of busbars 100 to rotate, the busbar assembly according to an embodiment of the present invention may include an elastic member 300. Specifically, the elastic member 300 may be disposed between the pair of busbars 100. That is, the elastic member 300 may be disposed between the first busbar 110 and the second busbar 120.

The elastic member 300 of the busbar assembly 10 may have one end connected to the first busbar 110 and the other end connected to the second busbar 120. Here, the elastic member 300 may provide elastic force in a direction in which the pair of busbars 100 move away from each other so that the busbar 100 is fixed to the electrode lead 21 of the cell. For example, the elastic member 300 may be a spring or the like. Here, the spring may be disposed in a compressed form to provide the force in the direction in which the pair of busbars 100 move away from each other.

Since the pair of busbars 100 are disposed forward and backward to across each other, the direction of the force provided by the elastic member 300 and the direction in which the busbar 100 rotates may be different from each other. In this regard, the pair of busbars 100 may be coupled to each other by the shaft 200, and movement in directions other than one direction in which the busbars 100 rotate may be restricted. Thus, even if the direction of the force provided by the elastic member 300 and the direction in which the busbar 100 rotates are different from each other, the busbar 100 may rotate only in one direction in which the busbars 100 move away from each other by the force provided by the elastic member 300.

Since the busbar assembly 10 according to an embodiment of the present invention includes the elastic member 300, a separate process such as welding for fixation may be omitted. Thus, assembly process efficiency of the busbar assembly 10 may be improved.

As described above, the busbar assembly 10 according to an embodiment of the present invention may have a shape different from that of the busbar assembly according to the related art. Thus, the busbar assembly 10 may be applied to relatively various types of battery modules, and thus, usability thereof may be improved.

Hereinafter, features of the busbar assembly 10 according to an embodiment of the present invention, which provide additional effects, will be described.

As an example of a configuration for efficient contact with the electrode lead 21, the busbar 100 of the busbar assembly 10 according to an embodiment of the present invention may have surfaces 114a and 114b that are parallel to one surface of the electrode lead 21 at one end thereof, which is in contact with the electrode lead 21. Specifically, one end of the substantially plate-shaped busbar 100 may have surfaces 114a and 114b that are cut parallel to a vertical direction with respect to FIG. 3.

In more details, when a portion of the busbar 100, which is disposed at one side of the shaft 200 so as to be in contact with the electrode lead 21, is referred to as a contact part 130, a portion of the busbar 100, which is disposed at the other side of the shaft 200 to extend in the direction away from the shaft 200 is referred to as an extension part 140, the surface 114a and 114b that are parallel to one surface of the electrode lead 21 may be disposed on ends of the contact part 130, respectively.

A surface of the busbar 100, which is in contact with the electrode lead 21, may be expanded through the above-described shape of the busbar 100 in the state in which the busbar assembly 10 is assembled with the battery module. Thus, the busbar 100 may be efficiently electrically connected to the electrode lead 21.

As an example of a configuration for improving the stability of the battery module, the shaft 200 of the busbar assembly 10 according to an embodiment of the present invention may include a polymer. Specifically, the shaft 200 may be made of a polymer. For example, the polymer that forms the shaft 200 may be plastic. Here, the polymer of the shaft 200 may have a melting point lower than that of the busbar 100. That is, even if a temperature of the busbar 100 increases due to the current flowing through the busbar 100, the shaft 200 may be melted before the busbar 100 is melted. When the shaft 200 is melted, the coupling between the pair of busbars 100 is released, and thus, the current flowing through the busbars 100 may be blocked.

Thus, when the temperature inside the battery module increases excessively, the current may be blocked due to a loss of the shaft 200 before the busbar 100 is melted to suppress the increase in temperature. As a result, an additional problem such as fire may be prevented from occurring inside the battery, and thus, the busbar assembly 10 according to an embodiment of the present invention may improve stability of the battery module.

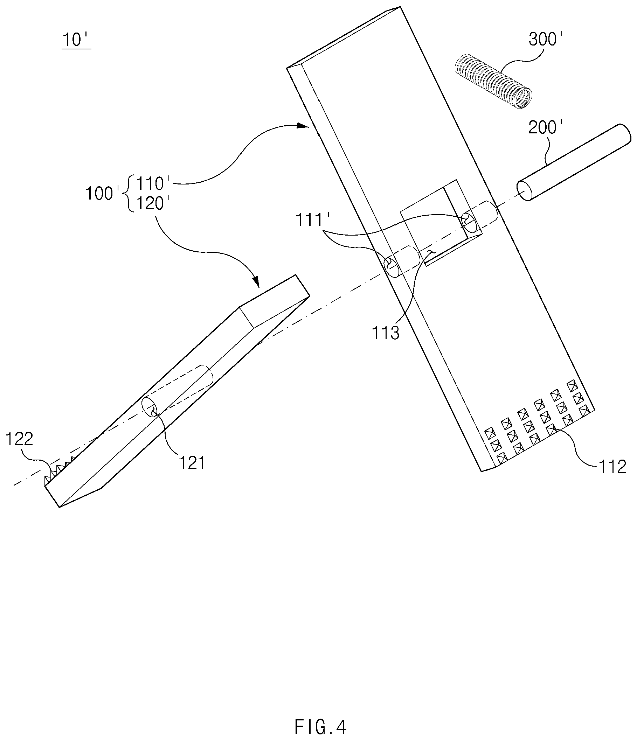

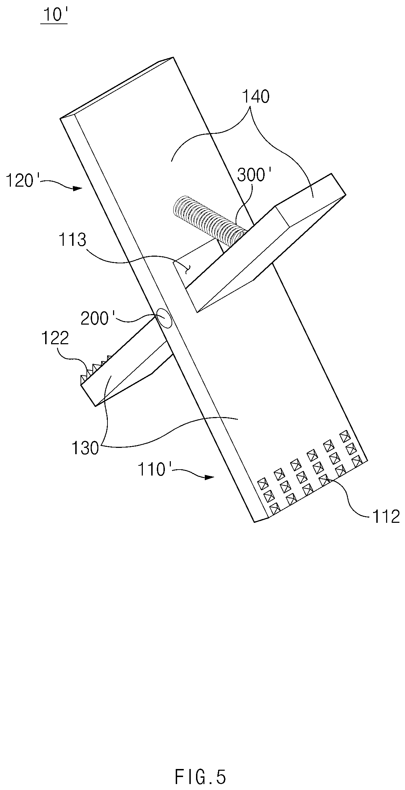

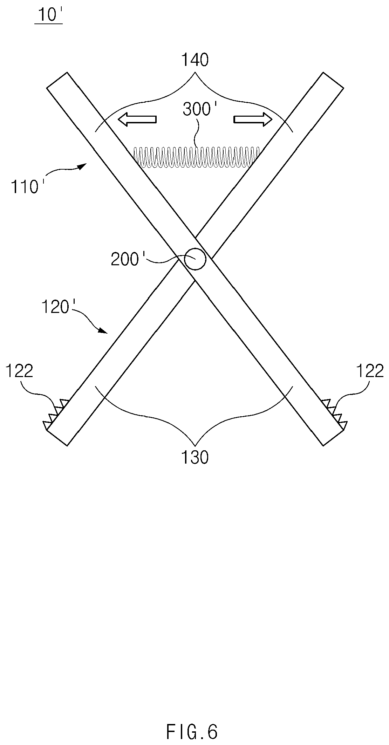

FIG. 4 a schematic exploded perspective view of a busbar assembly 10' according to another embodiment of the present invention, and FIG. 5 is a schematic perspective view of the busbar assembly 10' according to another embodiment of the preset invention. In addition, FIG. 6 is a schematic front view of the busbar assembly 10' according to another embodiment of the preset invention.

The busbar assembly 10' according to another embodiment of the present invention may be different from the busbar assembly 10 according to an embodiment of the present invention in coupled shape of busbars 100', arrangement position of an elastic member 300', and presence or absence of protrusions 112 and 122.

Hereinafter, a detailed description of the same configuration as that of the busbar assembly 10 according to an embodiment of the present invention will be omitted, and the description will focus on the differences.

The busbar assembly 10' according to another embodiment of the present invention may include a busbar 100', a shaft 200', and an elastic member 300'. Here, the busbar 100' may include a first busbar 110' and a second busbar 120'.

As an example of a configuration for efficient coupling of the first busbar 110' and the second busbar 120', the first busbar 110' according to another embodiment of the present invention may include an insertion hole 113. In this regard, the second busbar 120' according to another embodiment of the present invention may be coupled to be inserted into the first busbar 110'. Here, a space into which the second busbar 120' is inserted may be an insertion hole 113 of the first busbar 110'.

Referring to FIG. 4, the insertion hole 113 may be defined at a point of the first busbar 110' that crosses the second busbar 120' and may have a shape that is penetrated so that the second busbar 120' is inserted. Specifically, the insertion hole 113 may be defined as an empty space in a substantially rectangular parallelepiped shape.

The second busbar 120' may have a width less than that of the first busbar 110' so as to be inserted into the first busbar 110'. In addition, the second busbar 120' may have a width less than or equal to that of the insertion hole 113 to pass through the insertion hole 113. However, since movement of the first busbar 110' and the second busbar 120' other than rotation has to be minimized, a difference between the width of the insertion hole 113 and the width of the second busbar 120' may be very small. Preferably, the width of the insertion hole 113 and the width of the second busbar 120' may be provided to be the same so that the first busbar 110' and the second busbar 120' are fitted together.

The insertion hole 113 may have a thickness greater than that of the second busbar 120' so that the first busbar 110' and the second busbar 120' rotate with each other. Here, a thickness of the insertion hole 113 may mean a length of a straight line in the same direction as the thickness direction of the second busbar 120'.

Since the first busbar 110' includes the insertion hole 113, the first busbar 110' and the second busbar 120' may be efficiently coupled to each other in a rotatable state.

The first busbar 110' according to another embodiment of the present invention may include a first connection hole 111' having a different shape due to the insertion hole 113. Referring to FIG. 4, the first connection hole 111' may be defined at both sides of the insertion hole 113 and may have a shape passing from one surface to the other surface. That is, the first busbar 110' may have a first connection hole 111', an insertion hole 113, and a first connection hole 111', which are sequentially defined from one surface to the other surface at the point at which the first busbar 110' and the second busbar 120' cross each other.

Referring to FIGS. 4 and 5, since the second connection hole 121 is defined at a point at which the second busbar 120' disposed to pass through the insertion hole 113 crosses the first busbar 110', the shaft 200' may couple the first busbar 110' and the second busbar 120' to each other while passing through the first connection hole 111' and the second connection hole 121 at the same time.

Since the second busbar 120' according to another embodiment of the present invention is inserted into the first busbar 110', the shaft 200' may have a length less than that of the shaft 200' according to an embodiment.

As an example of a configuration to minimize an interference with a cell stack 20, an elastic member 300' according to another embodiment of the present invention may be disposed at a different position from the elastic member 300 according to an embodiment.

In this regard, the busbar 100' of the busbar assembly 10' may include a contact part 130 and an extension part 140. Specifically, the contact part 130 of the busbar 100' may be disposed at one side of the shaft 200' and be in contact with the electrode lead 21'. In addition, the extension part 140 of the busbar 100' may be disposed on the other side of the shaft 200' to extend in a direction away from the shaft 200'. Referring to FIGS. 4 and 5, the busbar 100' may be disposed in order of the contact part 130, the shaft 200', and the extension part 140 from one end. Here, the elastic member 300' may be disposed between the pair of extension parts 140. Specifically, one end and the other end of the elastic member 300' may be connected to the pair of extension parts 140, respectively.

Referring to FIG. 6, the elastic member 300' according to another embodiment of the present invention may be disposed between the pair of extension parts 140 and thus may be relatively far away from one end of the busbar 100' that is in contact with the electrode lead 21'. Thus, in the assembly process of the busbar assembly 10', an interference between the elastic member 300' and other components may be reduced to improve process efficiency.

The first busbar 110' and the second busbar 120' of the busbar 100' according to another embodiment of the present invention may be coupled to each other with a portion at which the first and second busbars 110' and 120' overlap each other. Thus, the direction of the force provided by the elastic member 300' and the rotation direction of the first busbar 110' and the second busbar 120' may coincide with each other. Thus, the force provided by the elastic member 300' may be efficiently transmitted to the first busbar 110' and the second busbar 120'.

As an example of a configuration for efficient contact with the electrode lead 21, the busbar 100' according to another embodiment of the present invention may include protrusions 112 and 122. Specifically, the first busbar 110' and the second busbar 120' may include protrusions 112 and 122, respectively. More specifically, each of the protrusions 112 and 122 may be disposed at one end of the contact part 130.

The protrusions 112 and 122 may be connected to ends of the first busbar 110' and the second busbar 120' that are in contact with the electrode lead 21' so as to be fixed to the surface of the electrode lead 21'. Specifically, the protrusions 112 and 122 may be disposed at one end of the contact part 130.

Referring to FIGS. 5 and 6, an end of each of the protrusions 112 and 122 may have a sharp shape that gradually decreases in cross-sectional area toward the end so that the protrusion is embedded in a surface of the electrode lead 21'. For example, each of the protrusions 112 and 122 may have a substantially square pyramid shape. It is sufficient for each of the protrusions 112 and 122 to have a sharp end, and its shape may vary.

The protrusions 112 and 122 may be provided in plurality to be spaced apart from each other. In the arrangement in which the plurality of protrusions 112 and 122 are disposed, a spaced distance therebetween may vary as necessary.

Since the protrusions 112 and 122 are disposed to be embedded in the surface of the electrode lead 21', the busbar assembly 10' may be efficiently connected to the electrode lead 21'.

In relation to various embodiments of the present invention, the features in the position of the elastic member 300 described above, the shape of the busbar 100 having the surfaces 114a and 114b parallel to one surface of the electrode lead, and the like may be applied to the same form as the busbar assembly 10' according to another embodiment of the present invention. Likewise, the features such as the position at which the elastic member 300' described in another embodiment of the present invention may be disposed and the shape of the busbar 100' including the protrusions 121 and 122 may also be applied to the same form as the busbar assembly 10 according to an embodiment of the present invention. That is, further another embodiment in addition to the embodiment described in the present invention may be derived by combining the features of the busbar assembly described above.

### Battery module

Hereinafter, a detailed description of the configuration of the previously described busbar assemblies 10 and 10' will be omitted.

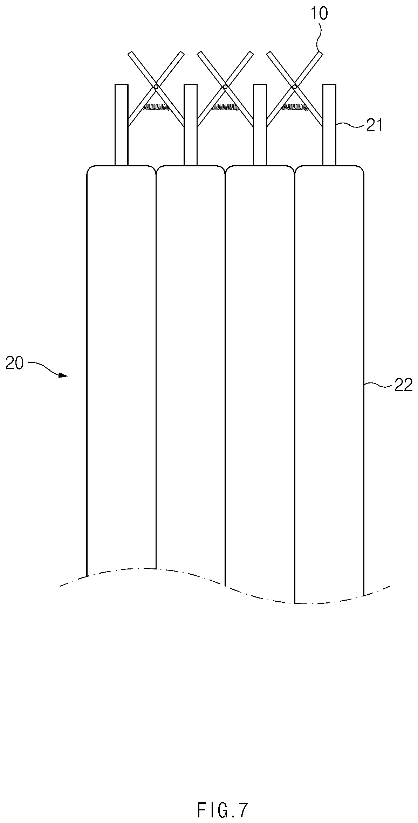

FIG. 7 is a schematic plan view illustrating a state in which a busbar assembly 10 is connected to an electrode lead 21 according to an embodiment of the present invention.

A battery module according to an embodiment of the present invention may include a busbar assembly 10 and a cell stack 20. Here, the cell stack 20 may have a form in which a plurality of cells including electrode leads 21 and cases 22 are stacked, and the busbar assembly 10 may be connected to the electrode leads 21 of the cells to electrically connect the plurality of cells to each other.

Each of the cells constituting the cell stack 20 of the battery module may be a pouch-type cell. The pouch-type cell may be referred to as a cell in which an electrode assembly including a positive electrode, a negative electrode, and a separator are accommodated in a pouch.

The electrode lead 21 of the cell may be disposed to protrude to the outside of the case 22. Specifically, the electrode lead 21 may have a shape that protrudes from one side or each of both sides of the case 22. Here, the case 22 may be a pouch.

Referring to FIG. 7, the busbar assembly 10 may be disposed between electrode leads 21 protruding from the case 22. The busbar assembly 10 may be in contact with the electrode lead 21 to electrically connect the cells to each other or to electrically connect the cell stack 20 to the outside. For the electrical connection, the busbar assembly 10 may be in contact with the electrode lead 21.

For efficient connection with the electrode lead 21, the busbar 100 of the busbar assembly 10 according to an embodiment of the present invention may have surfaces 114a and 114b, which are parallel to one surface of the electrode lead 21, at one end that is in contact with the electrode lead 21. A surface of the busbar 100, which is in contact with the electrode lead 21, may be expanded through the above-described shape of the busbar 100 in the state in which the busbar assembly 10 is assembled with the battery module. Thus, the busbar 100 may be efficiently electrically connected to the electrode lead 21.

An elastic member 300 of the busbar assembly 10 may provide force to the busbar 100 so that the busbar 100 is fixed between the electrode leads 21. That is, the busbar 100 may receive force to move from the elastic member 300 in a direction toward the electrode lead 21. Thus, the busbar assembly 10 may be disposed between the electrode leads 21 in a state of being in contact with the electrode leads 21 even without an additional process.

Although not shown in detail in the present invention, the battery module may further include additional members that electrically connect the busbar assemblies 10 to each other.

If an internal temperature increases excessively as a usage time of the battery module increases, there is a risk of fire occurring in the battery module. In this regard, the shaft 200 of the busbar assembly 10 according to an embodiment of the present invention may have a melting point lower than that of the busbar 100. Therefore, the shaft 200 may be melted and lost before the temperature rises enough to cause fire in the battery module, and the pair of busbars 100 connected to each other by the shaft 200 may be separated from each other due to the loss of the shaft 200.

Referring to FIG. 7, since the busbar assembly 10 is fixed to the electrode lead 21 even without a process such as welding, the busbars 100 separated from each other due to the loss of the shaft 200 may not be disposed in the state of being fixed to the electrode lead 21, and also, the cells may not be electrically connected to each other. Since a flow of current in the battery module is cut off due to the busbar assembly 10 being released from its fixed state, the temperature of the battery module may be prevented from rising further, and a risk of the fire may be reduced.

The battery module according to an embodiment of the present invention may include the busbar assembly 10, which improves efficiency and stability of the assembly process.

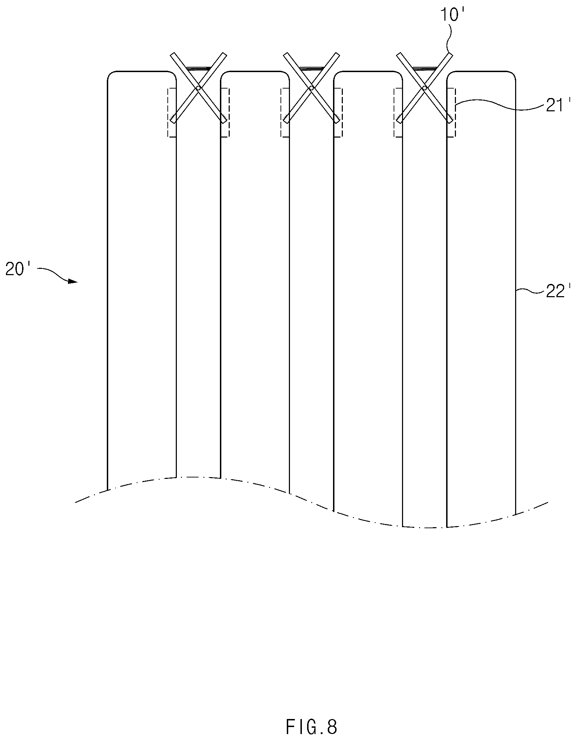

FIG. 8 is a schematic plan view illustrating a state in which a busbar assembly 10' is connected to an electrode lead 21' according to another embodiment of the present invention.

A battery module according to another embodiment of the present invention may include a busbar assembly 10' and a cell stack 20'. Here, the cell stack 20' may have a form in which a plurality of cells including different types of electrode leads 21' and cases 22' are stacked.

Each of the cells constituting the cell stack 20' of the battery module may be a pouch-type cell or a prismatictype cell. Each cell may be referred to as a cell in which an electrode assembly including a positive electrode, a negative electrode, and a separator are accommodated in a case 22'.

The electrode lead 21' of the cell may be disposed to be recessed into one surface of the case 22'. Here, the electrode lead 21' may be disposed on one surface or each of both surfaces of the case 22'. Although the case in which the electrode lead 21' of the cell according to another embodiment of the present invention is disposed to be recessed into the case 22' is described as an example, one surface of the electrode lead 21', which is opened to the outside, may be disposed on the same plane as one surface of the case 22'.

An insulating film may be disposed between the electrode lead 21' and the case 22'.

Referring to FIG. 8, the busbar assembly 10 may be disposed between the case 21' of one cell and the case 21' of the other cell adjacent to the one cell. As described above, the busbar assembly 10' may be assembled with a battery module in various forms.

The busbar assembly 10' may be in contact with the electrode lead 21' to electrically connect cells to each other or to electrically connect the cell stack 20' to the outside. That is, for the electrical connection, the busbar assembly 10' has to be in contact with the electrode lead 21'. In this regard, the busbar assembly 10' according to another embodiment of the present invention may be disposed in the form in which that the busbars 100' cross each other, and the elastic member 300' may provide force to the busbar 100', and thus, even when the electrode lead 21' is provided in the recessed form, the busbar assembly 10' may be in efficient contact with the electrode lead 21' without an additional process.

For the efficient connection with the electrode lead 21', the busbar 100' of the busbar assembly 10' according to another embodiment of the present invention may include protrusions 112 and 122. Specifically, the protrusions 112 and 122 may be disposed to one end of a first busbar 110' and the second busbar 120', which are in contact with the electrode lead 21', respectively, so as to be fixed to the surface of the electrode lead 21'.

Since sharp ends of the protrusions 112 and 122 reduce an area that is in contact with the surface of the electrode lead 21', a pressure applied to the electrode lead 21' may increase by force of the elastic member 300' that pushes the busbar 100'. Thus, a portion of the protrusions 112 and 122 may be disposed to be embedded in the surface of the electrode lead 21'. Thus, force for fixing the busbar assembly 10' to the electrode lead 21' may increase without additional processes such as welding.

As described above, the current may be blocked before the temperature of the battery module excessively increase by the shaft 200' having a melting point lower than that of the busbar 100'. In this regard, the first busbar 110' according to another embodiment of the present invention may include an insertion hole 113. Thus, the second busbar 120', which is disconnected from the first busbar 110' due to the loss of the shaft 200', may move through the insertion hole 113 by receiving the force provided by the elastic member 300' and thus be separated from the first busbar 110'.

Since the shaft 200' is melted prior to the busbar 100', the risk of the fire occurring in the battery module may be reduced, and also, the effect of improving the stability of the battery module may be the same as described above.

The busbar assemblies 10 and 10' according to various embodiments of the present invention may be assembled to other types of battery modules in addition to the type of battery module described as an example in the present invention.

While Embodiments of the present invention have been described with reference to the specific embodiments, it will be apparent to those skilled in the art that various changes and modifications may be made without departing from the spirit and scope of the invention as defined in the following claims.

### [Description of the Symbols]

10, 10': Busbar assembly
20, 20': Cell stack
21, 21': Electrode lead
22, 22': Case
100, 100': Busbar
110, 110': First busbar
111, 111': First connection hole
112, 122: Protrusion
113: Insertion hole
120, 120': Second busbar
121: Second connection hole
130: Contact part
140: Extension part
200, 200': Shaft
300, 300': Elastic member

## Claims

1. A busbar assembly comprising:
a pair of busbars crossing each other;
a shaft disposed at a point, at which the pair of busbars cross each other, to hingedly connect the pair of busbars to each other; and
an elastic member connected between the pair of busbars.

2. The busbar assembly of claim 1, wherein each of the pair of busbars comprises a connection hole defined at the point, at which the pair of busbars cross each other, to be penetrated from one surface to the other surface,
wherein the shaft is inserted into the connection hole so that the pair of busbars are connected to each other.

3. The busbar assembly of claim 1, wherein the shaft comprises a polymer having a melting point lower than that of the busbar.

4. The busbar assembly of claim 1, wherein the pair of busbars comprise:
a first busbar; and
a second busbar having a width less than that of the first busbar,
wherein the first busbar is provided at the point that crosses the second busbar and comprises an insertion hole that is penetrated so that the second busbar is inserted.

5. The busbar assembly of claim 4, wherein the first busbar comprises a first connection hole defined in each of both sides of the insertion hole and having a shape penetrated from one surface to the other surface, and
the second busbar comprises a second connection hole defined at the point that crosses the first busbar and having a shape penetrated from one surface to the other surface,
wherein the shaft is inserted into the first connection hole and the second connection hole so that the first busbar and the second busbar are connected to each other.

6. A battery module comprising:
a cell stack in which a plurality of cell, each of which comprises an electrode lead and a case, are stacked; and
a busbar assembly connected to the electrode leads of the cells to electrically connect the cells to each other,
wherein the busbar assembly comprises:
a pair of busbars, each of which one end is in contact with the electrode lead, the pair busbars crossing each other;
a shaft disposed at a point, at which the pair of busbars cross each other, to hingedly connect the pair of busbars to each other; and
an elastic member connected between the pair of busbars.

7. The battery module of claim 6, wherein the busbar has a surface, which is parallel to one surface of the electrode lead, on one end thereof that is in contact with the electrode lead.

8. The battery module of claim 6, wherein the busbar comprises a plurality of protrusions connected to one end thereof that is in contact with the electrode lead so as to be fixed to a surface of the electrode lead.

9. The battery module of claim 6, wherein the busbar comprises:
a contact part disposed at one side of the shaft and in contact with the electrode lead; and
an extension part disposed at the other side of the shaft and extending in a direction away from the shaft,
wherein the elastic member is disposed between the pair of extension parts and has one end and the other end, which are connected to the pair of extension parts, respectively.

10. The battery module of claim 6, wherein the electrode lead is disposed in a shape that protrudes to the outside of the case.

11. The battery module of claim 6, wherein the electrode lead is disposed in a shape that is recessed into one surface of the case.

12. The battery module of claim 11, wherein a portion of the busbar assembly is disposed between the case of one cell and the case of the other cell adjacent to the one cell.

## Amended claims

### Amended claims under Art. 19.1 PCT

1. A busbar assembly comprising:
a pair of busbars crossing each other;
a shaft disposed **at** a point, **at** which the pair of busbars cross each other, to hingedly connect the pair of busbars to each other; and
an elastic member connected between the pair of busbars.

2. The busbar assembly of claim 1, wherein each of the pair of busbars comprises a connection hole defined at the point, at which the pair of busbars cross each other, to be penetrated from one surface to the other surface,
wherein the shaft is inserted into the connection hole so that the pair of busbars are connected to each other.

3. The busbar assembly of claim 1, wherein the shaft comprises a polymer having a melting point lower than that of the busbar.

4. The busbar assembly of claim 1, wherein the pair of busbars comprise:
a first busbar; and
a second busbar having a width less than that of the first busbar,
wherein the first busbar is provided **at** the point that crosses the second busbar and comprises an insertion hole that is penetrated so that the second busbar is inserted.

5. The busbar assembly of claim 4, wherein the first busbar comprises a first connection hole defined in each of both sides of the insertion hole and having a shape penetrated from one surface to the other surface, and
the second busbar comprises a second connection hole defined **at** the point that crosses the first busbar and having a shape penetrated from one surface to the other surface,
wherein the shaft is inserted into the first connection hole and the second connection hole so that the first busbar and the second busbar are connected to each other.

6. A battery module comprising:
a cell stack comprising one **cell** and the other cell;
and
a busbar assembly configured to electrically connect the one cell and the other **cell** with each other,
wherein the busbar assembly comprises:
a pair of busbars that are in contact with the one cell and the other cell, respectively; and
an elastic member configured to provide force toward the one cell and the other cell to the pair of busbars so that the pair of busbars are in contact with the one cell and the other cell.

7. The battery module of claim 6, wherein each of the one cell and the other cell comprises:
an exterior configured to accommodate an electrode assembly therein; and
an electrode lead disposed in a shape that is recessed into one surface of the case, and
the busbar assembly comprises:
a first busbar provided to be electrically connected to the electrode lead of the one cell; and
a second busbar provided to be electrically connected to the electrode lead of the other cell, and
wherein the elastic member is configured to provide elastic force so that the first busbar is in contact with the electrode lead of the one cell, and the second busbar is in contact with the electrode lead of the other cell.

8. The battery module of claim 7, wherein the busbar has a surface, which is parallel to one surface of the electrode lead, on one end thereof that is in contact with the electrode lead.

9. The battery module of claim 7, wherein the busbar comprises a plurality of protrusions connected to one end thereof that is in contact with the electrode lead so as to be fixed to a surface of the electrode lead.

10. The battery module of claim 7, wherein the busbar comprises:
a shaft disposed at a point, at which the pair of busbars cross each other, to hingedly connect the pair of busbars to each other;
a contact part disposed at one side of the shaft and in contact with the electrode lead; and
an extension part disposed at the other side of the shaft and extending in a direction away from the shaft,
wherein the elastic member is disposed between the pair of extension parts and has one end and the other end, which are connected to the pair of extension parts, respectively.

11. The battery module of claim 6, wherein each of the one cell and the other cell comprises:
an exterior configured to accommodate an electrode assembly therein; and
an electrode lead disposed in a shape that protrudes to the outside of the case, and
the busbar assembly comprises:
a first busbar provided to be electrically connected to the electrode lead of the one cell; and
a second busbar provided to be electrically connected to the electrode lead of the other cell, and
wherein the elastic member is configured to provide elastic force so that the first busbar is in contact with the electrode lead of the one cell, and the second busbar is in contact with the electrode lead of the other cell.

12. The battery module of claim 6, wherein a portion of the busbar assembly is disposed between the case of one cell and the case of the other cell adjacent to the one cell.
